# EUROPÄISCHE PATENTSCHRIFT

(11) **EP 4 282 249 B1**
(45) Veröffentlichungstag und Bekanntmachung des Hinweises auf die Patenterteilung: **29.07.2026**
(21) Anmeldenummer: 23174852.6
(22) Anmeldetag: 23.05.2023
(51) Int. Cl.: A01F 15/07

(54) **RUNDBALLENPRESSE**
ROUND BALER
PRESSE À BALLES RONDES

(30) Priorität: 23.05.2022 DE 102022112957
(43) Veröffentlichungstag der Anmeldung: 29.11.2023
(73) Patentinhaber: Maschinenfabrik Bernard Krone GmbH & Co. KG, 48480 Spelle (DE)
(72) Erfinder: Horstmann, Josef, 49479 Ibbenbüren (DE)

(56) Entgegenhaltungen:
- EP-A1- 1 430 767
- EP-A1- 2 556 744
- EP-A2- 3 666 061
- EP-B1- 2 196 082
- US-A- 4 955 188
- US-A1- 2018 064 033
- US-B2- 8 677 724

## Beschreibung

Die vorliegende Erfindung betrifft eine Rundballenpresse nach dem Oberbegriff von Anspruch 1.

Rundballenpressen werden in der Landwirtschaft eingesetzt, um Erntegut wie z.B. Heu oder Stroh aufzunehmen und zu Ballen zu verpressen. Das Erntegut wird (z.B. durch eine Pick-up) vom Boden aufgenommen, weitergefördert, normalerweise zerkleinert (z.B. mittels eines Schneidrotors) und schließlich in einer Presskammer zu runden Erntegutballen verpresst. Dort wirken Presselemente auf das Erntegut ein, die auch als Förderelemente wirken und eine umlaufende Bewegung des Ernteguts erzeugen. Der fertige Ballen wird in einem Bindevorgang mit einem Bindematerial umwickelt. Als Bindematerial können Schnüre, Netze oder (z.B. im Falle von Gras) Folien verwendet werden, wobei letztere auch außerhalb der Rundballenpresse in einem hiervon separaten Ballenwickelgerät appliziert werden können. Nach dem Binden innerhalb der Presskammer wird der Ballen ausgeworfen. Erst danach kann die Presskammer wieder zur Bildung eines neuen Ballens genutzt werden. Es entsteht somit ein erheblicher Zeitraum, innerhalb dessen kein Erntegut verarbeitet werden kann. Dies bedeutet normalerweise, dass die Erntegutaufnahme so lange unterbrochen werden muss. D.h. die Rundballenpresse muss für den Binde- und Auswurfvorgang anhalten, welcher typischerweise ca. ein Drittel der gesamten Einsatzzeit beansprucht, was die Produktivität wesentlich beeinträchtigt.

Es ist daher im Stand der Technik bereit vorgeschlagen worden, einen Zwischenspeicher für Erntegut vorzusehen, der gefüllt wird, wenn kein Erntegut verarbeitet werden kann, und beim nächsten Ballenbildungsvorgang wieder geleert wird. Die vorgeschlagenen Lösungen wurden allerdings entweder nicht zur Serienreife geführt oder haben sich nicht durchsetzen können. Z.T. sind die zugrundeliegenden Mechanismen zu komplex.

Die Druckschrift EP 2 556 744 A1 offenbart beispielsweise eine kontinuierlich arbeitende Rundballenpresse mit einer Presskammer und einem Speicherraum zum phasenweisen Zwischenspeichern von Erntegut.

Aufgabe der Erfindung ist es, verbesserte Mittel bereitzustellen, die einer Rundballenpresse eine kontinuierliche Erntegutaufnahme ermöglichen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, aufweisend einen zu einer Presskammer führenden Zuführkanal, eine Übergabevorrichtung mit einem Übergaberotor, der um eine Übergabeachse in einer Kammerzuführrichtung antreibbar ist, um in einem Pressmodus Erntegut durch den Zuführkanal in Richtung der Presskammer zu fördern, sowie eine Speichervorrichtung mit einem Speicherraum zur zeitweisen Aufnahme von Erntegut.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Der Begriff "Rundballenpresse" schließt hierbei ausdrücklich auch Maschinen ein, die zusätzlich zu einem Pressen des Ernteguts zu Ballen auch ein Binden und/oder Verpacken der Ballen durchführen. Das Erntegut kann mit einer Aufnahmevorrichtung, insbesondere einer Pick-up, aufgenommen und durch den Zuführkanal in Richtung der Presskammer gefördert werden. Zum Fördern kann die Rundballenpresse wenigstens eine Fördervorrichtung aufweisen, z.B. einen Förderrotor oder einen Schneidrotor, der das Erntegut nicht nur weiterfördert, sondern auch schneidet. In jedem Fall durchläuft der Erntegutstrom den Zuführkanal, bevor er zur Presskammer gelangt. Der Zuführkanal ist zur Führung des Ernteguts ausgebildet, wobei er nicht notwendigerweise vollständig geschlossen ausgebildet sein muss.

Die Ausbildung der Presskammer ist im Rahmen der Erfindung nicht festgelegt. So kann es sich um eine Presskammer mit fester oder variabler Größe handeln. Im ersteren Fall kann die Rundballenpresse eine Mehrzahl von Presswalzen aufweisen, die um bezüglich eines Rahmens stationäre Drehachsen drehbar sind. Im letzteren Fall ist die Presskammer wenigstens teilweise durch ein endloses, umlaufend antreibbares Presselement definiert, wobei es sich um ein oder mehrere endlose Pressriemen oder -gurte handeln kann oder z.B. einen Kettenstabförderer.

Die Rundballenpresse weist eine Übergabevorrichtung mit einem Übergaberotor auf, wobei diese Bezeichnung nicht einschränkend auszulegen ist. Der Übergaberotor ist um eine Übergabeachse antreibbar, wobei er zumindest zeitweise im Pressmodus angetrieben ist. Die entsprechende Drehrichtung des Übergaberotors wird hier als "Kammerzuführrichtung" bezeichnet. Die Antriebskraft kann z.B. mechanisch, elektrisch, hydraulisch, elektrohydraulisch oder in anderer Weise erzeugt werden. Die Übergabeachse vorläuft in aller Regel parallel zur Querachse bzw. Y-Achse der Rundballenpresse. Allgemein dient die Übergabevorrichtung zumindest im Pressmodus dazu, Erntegut an die Presskammer zu übergeben, indem sie dieses mittels des Übergaberotors durch den Zuführkanal in Richtung der Presskammer fördert. Insofern kann die Übergabevorrichtung auch als eine Fördervorrichtung angesehen werden. Der Pressmodus kann auch als Ballenbildungsmodus bezeichnet werden und kennzeichnet denjenigen Arbeitsmodus der Rundballenpresse, in welchem Erntegut der Presskammer sukzessive zugeführt wird, wobei ein Erntegutballen geformt und gepresst wird.

Außerdem weist die Rundballenpresse eine Speichervorrichtung auf, mit einem Speicherraum zur Zwischenspeicherung von Erntegut, welcher über wenigstens eine Speicheröffnung mit dem Zuführkanal in Verbindung steht. Der Speicherraum dient also dazu, Erntegut zwischenzeitlich aufzunehmen. Wie nachfolgend noch erläutert wird, ist dies insbesondere für die Zeit vorgesehen, wenn ein Erntegutballen fertiggestellt wurde. Bevor mit der Bildung des nächsten Ballens begonnen werden kann, muss der fertiggestellte Ballen gebunden und ausgeworfen werden. Statt die Erntegutaufnahme in dieser Zeit zu unterbrechen, kann Erntegut im Speicherraum der Speichervorrichtung zwischengespeichert und für die nächste Ballenbildung wieder abgegeben und der Presskammer zugeführt werden. Der Speicherraum steht über wenigstens eine Speicheröffnung mit dem Zuführkanal in Verbindung. Die Verbindung zum Zuführkanal muss nicht unmittelbar gegeben sein, d.h. der Zuführkanal muss sich nicht unmittelbar jenseits der Speicheröffnung an den Speicherraum anschließen, sondern es könnte auch ein Verbindungskanal zwischengeordnet sein. In jedem Fall ist durch die wenigstens eine Speicheröffnung ein Austausch von Erntegut zwischen dem Zuführkanal und dem Speicherraum möglich. Die jeweilige Speicheröffnung kann verschließbar ausgebildet sein, bevorzugt ist sie allerdings dauerhaft geöffnet. Bevorzugt ist genau eine Speicheröffnung vorgesehen.

Erfindungsgemäß ist der Übergaberotor dazu eingerichtet, in einem Speichermodus unter Drehung in einer der Kammerzuführrichtung entgegengesetzten Speicherzuführrichtung Erntegut aus dem Zuführkanal zur Zwischenspeicherung in Richtung des Speicherraums zu führen und im Pressmodus von der Speichervorrichtung abgegebenes Erntegut durch den Zuführkanal in Richtung der Presskammer zu fördern. D.h. dem Übergaberotor (bzw. der Übergabevorrichtung) kommt gewissermaßen eine dreifache Funktion zu. Zum einen dient er im Pressmodus dazu, den normalen Erntegutfluss (von der Aufnahmevorrichtung) durch den Zuführkanal zur Presskammer zu unterstützen, d.h. insbesondere aufrechtzuerhalten. Des Weiteren führt er im Speichermodus (aktiv und/oder passiv) Erntegut in Richtung des Speicherraums, was die Möglichkeit einschließt, dass er es bis in den Speicherraum hinein führt. Man kann sagen, dass er einen von der Aufnahmevorrichtung kommenden Aufnahme-Erntegutstrom gegenüber dem Pressmodus umlenkt oder umleitet. Er ist dabei in beiden Modi im oder am Erntegutstrom angeordnet. Die dritte Funktion besteht darin, das Entleeren des Speicherraums zumindest zu unterstützen, indem der Übergaberotor Erntegut aus dem Speicherraum übernimmt und durch den Zuführkanal zur Presskammer hin fördert. Dabei können sich während des Pressmodus wenigstens zeitweise der von der Aufnahmevorrichtung kommende Aufnahme-Erntegutstrom und ein aus dem Speicherraum kommender Speicher-Erntegutstrom zu einem Gesamt-Erntegutstrom vereinigen, welcher der Presskammer zugeführt wird. Der Übergaberotor kann seine Funktion im Pressmodus einerseits sowie im Speichermodus andererseits dadurch ausführen, dass eine Drehrichtungsumkehr erfolgt, d.h. der Übergaberotor dreht im Speichermodus in Gegenrichtung zur Kammerzuführrichtung, was in diesem Zusammenhang als "Speicherzuführrichtung" bezeichnet wird.

Die Speichervorrichtung ist ihrerseits dazu vorgesehen, im Speichermodus Erntegut aus dem Zuführkanal über wenigstens eine Speicheröffnung aufzunehmen und im Pressmodus Erntegut über wenigstens eine Speicheröffnung an den Zuführkanal abzugeben. Der Speichermodus könnte auch als Bindemodus, Auswurfmodus oder Binde-und-Auswurfmodus bezeichnet werden, da dieser Modus gewählt werden kann, während der Erntegutballen gebunden und/oder ausgeworfen wird, so dass der Presskammer kein Erntegut zugeführt werden kann. In diesem Speichermodus ist vorgesehen, dass Erntegut aus dem Zuführkanal über wenigstens eine Speicheröffnung (bevorzugt: die Speicheröffnung) in den Speicherraum der Speichervorrichtung gelangt, wo es zwischengespeichert werden kann. Wenn der Binde- und Auswurfvorgang beendet ist, kann der Presskammer wieder Erntegut zugeführt werden und die Rundballenpresse kann wieder in den Pressmodus wechseln. Das zuvor zwischengespeicherte Erntegut kann dann über wenigstens eine Speicheröffnung (bevorzugt: die Speicheröffnung) an den Zuführkanal abgegeben werden.

Die erfindungsgemäße Rundballenpresse ermöglicht u.U. eine ununterbrochene Erntegutaufnahme, so dass ein Anhalten zum Binden und/oder Auswerfen des Ballens unnötig ist. Vor allem bedeutet dies einen Zeitvorteil, da die genannten Vorgänge einen wesentlichen Anteil der Gesamtzeit zur Bereitstellung eines Erntegutballens beanspruchen (bspw. ca. ein Drittel, während die übrigen zwei Drittel für die Ballenbildung benötigt werden). Unter Umständen kann auch der Energieverbrauch gesenkt werden, da das Anhalten und erneute Anfahren für jeden Bindevorgang entfallen. Dadurch, dass der Übergaberotor der Übergabevorrichtung in beiden Betriebsmodi zum Führen und/oder Fördern des Erntegutstroms dient, lässt sich die Anzahl der notwendigen Komponenten reduzieren und der Gesamtaufbau der Rundballenpresse vereinfachen. Diese kann daher kompakter ausgestaltet sein. Auch der Übergaberotor als solcher lässt sich vergleichsweise einfach und mechanisch robust realisieren.

Wie bereits oben erläutert, ist die Rundballenpresse bevorzugt dazu eingerichtet, im Pressmodus wenigstens zeitweise einen von einer Aufnahmevorrichtung kommenden Aufnahme-Erntegutstrom mit einem von der Speichervorrichtung kommenden Speicher-Erntegutstrom zu einem Gesamt-Erntegutstrom zusammenzuführen und diesen der Presskammer zuzuführen. Die Aufnahmevorrichtung (z.B. eine Pick-up) ist dazu eingerichtet, Erntegut von einem Feld aufzunehmen und dem Zuführkanal zuzuführen.

Hinsichtlich der Ausgestaltung der Speichervorrichtung bestehen im Rahmen der Erfindung unterschiedlichste Möglichkeiten. Insbesondere kann sie eine Speicherwandung aufweisen, die den Speicherraum nach außen begrenzt, sowie einen antreibbaren Speicherförderer zum umlaufenden Fördern von Erntegut innerhalb des Speicherraums. Dabei ist die Speicherwandung bevorzugt starr ausgebildet und positionsfest mit einem Rahmen der Rundballenpresse verbunden. Hier und im Folgenden ist mit "Rahmen" derjenige Teil der Rundballenpresse bezeichnet, der gewissermaßen ihre Grundstruktur bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile nach außen abschirmt. Die Speicherwandung ist typischerweise aus Metall, z.B. Stahlblech, ausgebildet. Sie begrenzt den Speicherraum nach außen und definiert somit dessen äußere Dimensionen, was allerdings nicht bedeutet, dass sie ihn vollständig umgeben muss. Sie sorgt dafür, dass Erntegut nicht unkontrolliert aus dem Speicherraum entweichen kann, wobei allerdings ein teilweises Entweichen je nach Ausgestaltung akzeptabel sein kann.

Der Speicherförderer kann z.B. mechanisch, elektrisch, hydraulisch, elektrohydraulisch oder in anderer Weise antreibbar sein. Er ist dazu ausgebildet, das Erntegut umlaufend zu fördern, also nach Art eines Umlaufförderers oder Kreisförderers. Im Großen und Ganzen wird das Erntegut also auf einer ringartig geschlossenen Bahn durch den Speicherraum gefördert, wenngleich die exakte Bewegungsbahn einzelner Stücke des Ernteguts u.U. nicht geschlossen ist. Da der Speicherförderer das Erntegut innerhalb des Speicherraums fördert, ist er selbst wenigstens teilweise im Speicherraum angeordnet. Eine bevorzugte Ausgestaltung sieht vor, dass der Speicherförderer um eine Speicherachse rotatorisch antreibbar ist, wobei die Speicherwandung wenigstens überwiegend rotationssymmetrisch zur Speicherachse ausgebildet ist. Der Speicherförderer kann dabei auch als Speicherrotor bezeichnet werden. Weiterhin kann der Speicherförderer ein Speicherförderer-Innenteil mit einer den Speicherraum nach innen begrenzenden Fördererwandung aufweisen sowie vom Speicherförderer-Innenteil zur Speicherwandung hin abragende Speicherzinken.

Vorteilhaft ist der Übergaberotor dazu eingerichtet ist, im Pressmodus in den Speicherraum einzugreifen, um Erntegut aus diesem herauszufördern. Hierdurch kann die Entleerung des Speicherraums beschleunigt werden, was für die Gesamtzeit zur Bildung des neuen Erntegutballens von wesentlicher Bedeutung ist. Das Eingreifen in den Speicherraum bedeutet, dass wenigstens ein Teil oder Teile des Übergaberotors durchgehend oder zeitweise im Speicherraum angeordnet sind. Insbesondere können die entsprechenden Teile, der Rotationsbewegung des Übergaberotors folgend, abwechselnd in den Speicherraum eingreifen oder eintauchen und den Speicherraum wieder verlassen, wobei sie Erntegut mit herausziehen können.

Es sind Ausführungsformen denkbar, bei denen die Übergabeachse stationär bezüglich des Rahmens der Rundballenpresse angeordnet ist. In der Regel lässt sich die Funktionsweise allerdings dadurch optimieren, dass der Übergaberotor drehbar an einem Rotorträger gelagert ist, der gegenüber einem Rahmen der Rundballenpresse verstellbar ist. Die Übergabeachse verläuft hierbei durch den Rotorträger und verändert ihre Position, wenn der Rotorträger verstellt wird. Hierdurch kann je nach Betriebsmodus oder je nach Phase des Betriebsmodus eine optimale Position des Übergaberotors eingestellt werden. Die Verstellung des Rotorträgers erfolgt durch wenigstens einen Aktor, bspw. elektrisch, hydraulisch, elektrohydraulisch oder pneumatisch.

Bevorzugt ist vorgesehen, dass der Übergaberotor in Abhängigkeit von der Stellung des Rotorträgers durch eine Speicheröffnung in den Speicherraum eingreift. Dies kann bedeuten, dass der Übergaberotor je nach Stellung des Rotorträgers in den Speicherraum eingreift oder nicht. Alternativ oder zusätzlich kann es bedeuten, dass der Übergaberotor je nach Stellung des Rotorträgers unterschiedlich weit in den Speicherraum eingreift. Auf diese Weise kann der Speicherrotor je nach Bedarf Bereiche des Speicherraums erreichen, die nahe der Speicheröffnung angeordnet sind oder weiter von dieser entfernt. Dies kann sowohl für das Hineinfördern von Erntegut in den Speicherraum als auch für das Ausfördern von Erntegut von Vorteil sein.

Die Rundballenpresse kann dazu eingerichtet sein, den Rotorträger im Pressmodus derart zu verstellen, dass der Übergaberotor im zeitlichen Verlauf zunehmend in den Speicherraum eingreift. Eine Steuereinheit der Rundballenpresse kann die Verstellung des Rotorträgers so steuern, dass der Übergaberotor nach dem Wechsel vom Speichermodus in den Pressmodus zunächst nicht oder nur wenig in den Speicherraum eingreift und dann im weiteren Verlauf weiter in den Speicherraum eingreift. Auf diese Weise kann der Übergaberotor zunächst Erntegut aus den öffnungsnahen Bereichen des Speicherraums herausfördern und sich dann weiter in den Speicherraum hineinarbeiten. Besonders vorteilhaft ist diese Ausführungsform allerdings dann, wenn die Speichervorrichtung einen Speicherförderer aufweist, dessen Bewegung der Übergaberotor entgegenläuft. Wird der Übergaberotor wie beschrieben nach und nach in den Speicherraum hinein bewegt, kann vermieden werden, dass übermäßige Drehmomente am Übergaberotor auftreten.

Alternativ oder zusätzlich kann die Rundballenpresse dazu eingerichtet sein, den Rotorträger im Speichermodus derart zu verstellen, dass der Übergaberotor im zeitlichen Verlauf weniger in den Speicherraum eingreift. Dies beinhaltet die Möglichkeit, dass der Übergaberotor nach dem Wechsel vom Pressmodus zum Speichermodus zunächst in den Speicherraum eingreift und im späteren Verlauf aus dem Speicherraum herausgeführt wird. Ebenso ist es möglich, dass der Übergaberotor zunächst weit in den Speicherraum eingreift und später weniger weit. Hierdurch ist es möglich, dass der Übergaberotor Erntegut zunächst in den weiter von der Speicheröffnung entfernten Bereichen deponiert und im weiteren Verlauf immer näher an der Speicheröffnung.

Sowohl das Hereinführen des Übergaberotors in den Speicherraum als auch das Herausführen können entweder nach einem zuvor festgelegten Zeitablauf erfolgen oder sie können in Abhängigkeit von einem Füllungsgrad des Speicherraums erfolgen. Im letzteren Fall weist die Speichervorrichtung wenigstens einen Sensor auf, mittels dessen sich der Füllungsgrad bestimmen lässt. Bspw. könnte ein federbelasteter Fühler (ein Hebel, eine Klappe oder dergleichen) vorgesehen sein, die in den Speicherraum hineinragen und durch das Erntegut ausgelenkt werden. Alternativ könnte bspw. auch eine notwendige Antriebskraft und/oder einen Antriebsmoment des Speicherförderers herangezogen werden, welche ebenfalls ein Maß für den Füllungsgrad darstellen.

Eine Ausführungsform sieht vor, dass die Rundballenpresse dazu eingerichtet ist, eine Drehrichtungsumkehr des Übergaberotors vorzunehmen, wenn dieser wenigstens überwiegend aus dem Speicherraum herausgeführt ist. Insbesondere kann der Übergaberotor vollständig aus dem Speicherraum herausgeführt sein, also vollständig außerhalb des Speicherraums angeordnet sein. Auf diese Weise ist sichergestellt, dass die Drehrichtungsumkehr zu einem Zeitpunkt erfolgt, zu welchem der Übergaberotor nicht oder nur in geringem Maße mit Erntegut innerhalb des Speicherraums kollidieren kann. Dies kann insbesondere vorteilhaft sein, wenn die Speichervorrichtung einen umlaufend angetriebenen Speicherförderer aufweist. Je nach Drehrichtung läuft der Übergaberotor in einem Modus ungefähr in Bewegungsrichtung des Speicherförderers und im anderen Modus ungefähr entgegengesetzt hierzu. Wenngleich Übergaberotor und Speicherförderer nicht unmittelbar miteinander in Berührung kommen, können dennoch über zwischengeordnetes Erntegut erhebliche Kräfte zwischen diesen wirken. Der Richtungswechsel des Übergaberotors könnte hierdurch gestört werden, weshalb es günstiger ist, diesen außerhalb des Speicherraums durchzuführen.

Bevorzugt weist der Übergaberotor eine Mehrzahl von Übergabezinken auf, die sich bezüglich der Übergabeachse radial nach außen erstrecken. Die Übergabezinken können an einem Übergaberotor-Innenteil oder einer Übergaberotor-Nabe oder Welle angeordnet sein, die bezüglich der Übergabeachse radial innen angeordnet ist. Mit diesem Übergaberotor-Innenteil können sie insbesondere starr verbunden sein. Dabei wirkt eine Antriebskraft und/oder ein Antriebsdrehmoment des Übergaberotors auf das Übergaberotor-Innenteil, welches seinerseits als Träger für die Speicherzinken wird und diese mit bewegt. Die Übergabezinken bilden Förderelemente bzw. Förderorgane, die die Antriebskraft des Übergaberotors auf das Erntegut übertragen. Umgekehrt kann aber auch seitens des Erntegutes eine Kraft auf die Übergabezinken ausgeübt werden, wodurch der Übergaberotor passiv gedreht werden kann. In aller Regel ist jeder Übergabezinken in sich starr ausgebildet, wenngleich eine gewisse Elastizität möglich ist. Typischerweise bestehen die Übergabezinken aus Metall, bspw. Stahl. Der Begriff "Zinken" ist hinsichtlich der Form nicht einschränkend auszulegen. Eine typische Bauform sieht allerdings vor, dass wenigstens ein Teil des Übergabezinkens flächig, bspw. aus Metallblech, ausgebildet ist, wobei die Schmalseite des Zinkens in Bewegungsrichtung zeigt. Ein derart orientiertes Metallblech kann allerdings auch einen Basisabschnitt des Zinkens bilden, mit dem ein Aufsatz verbunden, bspw. verschweißt, ist. Der Aufsatz kann seinerseits durch einen Blechstreifen gebildet sein, dessen Schmalseite allerdings im Winkel, bspw. im rechten Winkel, zur Bewegungsrichtung orientiert ist. Bei dieser Ausgestaltung kann der Aufsatz den Basisabschnitt gewissermaßen abschirmen und vor Verschleiß schützen. Außerdem können sich Aufsatz und Basisabschnitt gegenseitig mechanisch stabilisieren, so dass sich mit weniger Material ein insgesamt stabilerer Übergabezinken realisieren lässt.

Vorteilhaft weist der Übergaberotor eine Mehrzahl von bezüglich der Übergabeachse zueinander axial und tangential versetzt angeordneten Zinkenkränzen auf, wobei jeder Zinkenkranz eine Mehrzahl von tangential zueinander versetzt angeordneten Übergabezinken aufweist. Die Übergabezinken, die einem Zinkenkranz zugeordnet sind, haben dabei bezüglich der Übergabeachse normalerweise gleiche oder nur geringfügig voneinander abweichende axiale Positionen. Die Anzahl der Übergabezinken in einem Zinkenkranz kann unterschiedlich gewählt werden, normalerweise sind zwischen 3 und 6 Übergabezinken pro Zinkenkranz vorgesehen. Dabei ist eine Mehrzahl von Zinkenkränzen vorgesehen, von denen jeder in der Regel die gleiche Anzahl Übergabezinken aufweist. Die Zinkenkränze sind axial zueinander versetzt. Zusätzlich sind die Zinkenkränze tangential zueinander versetzt, was bedeutet, dass die Zinken unterschiedlicher Zinkenkränze unterschiedliche tangentiale Positionen bezüglich der Übergabeachse aufweisen. Letzteres kann insbesondere den Vorteil haben, dass derart versetzten Zinken im Zuge der Rotation normalerweise zu unterschiedlichen Zeitpunkten mit einer bestimmten Menge Erntegut zusammenwirken, bspw. in das Erntegut einstechen. Auf diese Weise können kurzzeitig auftretende Kraft- und/oder Drehmomentspitzen vermieden werden. Insbesondere bei einer großen Anzahl von Zinkenkränzen ist es möglich, dass der Übergaberotor trotz des beschriebenen tangentialen Vorsatzes Paare oder auch Gruppen von Zinkenkränzen aufweist, die nicht zueinander versetzt sind. Diese machen allerdings jeweils nur einen geringen Teil der Gesamtzahl an Zinkenkränzen aus. Bevorzugt sind zwischen benachbarten Zinkenkränzen axiale Zwischenräume ausgebildet, um ein Eingreifen des Übergaberotors in den Speicherraum zu ermöglichen, ohne dass es zu einer Kollision zwischen Übergabezinken und Förderorganen (z.B. Speicherzinken) eines Speicherförderers kommt. D.h. benachbarte Zinkenkränze sind in axialer Richtung bezüglich der Übergabeachse so weit beabstandet, dass zwischen ihnen jeweils einen Zwischenraum ausgebildet ist. Dieser erstreckt sich dann tangential umlaufend um die Speicherachse herum. In diesem Zwischenraum können sich Förderorgane des Speicherförderers ohne Kollisionsgefahr bewegen.

In den allermeisten Fällen ist es notwendig, dass dem Übergaberotor wenigstens ein Abstreifer zugeordnet ist. Dieser sorgt im Zusammenwirken mit den Übergabezinken dafür, dass am Übergaberotor anhaftendes Erntegut von diesem abgestreift wird. Soweit ein Rotorträger vorgesehen ist, ist es bevorzugt, dass am Rotorträger wenigstens ein Abstreifer für den Übergaberotor angeordnet ist. Da der Übergaberotor für zwei entgegengesetzte Drehrichtungen ausgelegt ist, muss dies in der Regel auch für den Abstreifer gelten, d. h. dieser muss beidseitig wirken. D.h. es müssen zwei Abstreifer auf gegenüberliegenden Seiten des Rotorträgers vorgesehen sein. In bekannter Weise weist der jeweilige Abstreifer Ausnehmungen und/oder Zwischenräume auf, durch welche die Übergabezinken im Zuge ihrer Rotation hindurchgeführt werden können. Die Zwischenräume sind zwischen Abstreiferelementen und/oder Abstreiferabschnitten ausgebildet, die bspw. in die oben erwähnten axialen Zwischenräume zwischen Zinkenkränzen eingreifen können.

Um ein effektives Zusammenwirken mit einem Abstreifer zu ermöglichen (unabhängig davon, ob dieser an einem Rotorträger ausgebildet ist oder bspw. stationär am Rahmen angeordnet), ist es bevorzugt, dass die Übergabezinken sowohl auf einer in Kammerzuführrichtung vorne angeordneten Kammerzuführseite als auch auf einer in Speicherzuführrichtung vorne angeordneten Speicherzuführseite eine Rückwärtsneigung aufweisen, so dass die jeweilige Kante des Übergabezinkens radial außen hin tangential zurückweicht. Die Speicherzuführseite entspricht dabei in tangentialer Richtung derjenigen Seite, die bei einer Rotation in Speicherzuführrichtung in Bewegungsrichtung der Übergabezinken liegt, während die Kammerzuführseite bei einer Rotation in Kammerzuführrichtung in Bewegungsrichtung der Übergabezinken liegt. Die Begriffe "Vorwärtsneigung" bzw. "Rückwärtsneigung" bezeichnen hierbei jeweils eine Neigung gegenüber der axialradialen Ebene. Eine Rückwärtsneigung bezeichnet eine Neigung, bei der die Kante wie beschrieben nach außen hin (also zu einem radial äußeren Ende hin) tangential zurückweicht. Eine Vorwärtsneigung wäre dementsprechend eine, bei der die Kante nach außen hin tangential vorspringt. Dies ist immer bezogen auf die Richtung, in die die jeweilige Kante tangential weist, also in diesem Fall die Kammerzuführrichtung oder Speicherzuführrichtung. Durch die Rückwärtsneigung ist es möglich, im Zusammenwirken mit dem Abstreifer eine radial nach außen wirkende Kraftkomponente auf das Erntegut zu erzeugen, so dass dieses nach außen abgestreift wird.

Insbesondere können die Übergabezinken auf der Speicherzuführseite eine stärkere Rückwärtsneigung aufweisen als auf der Kammerzuführseite. Dies ist insofern sinnvoll, als mit der Speicherzuführseite Erntegut in den Speicherraum hinein gefördert wird, so dass hier qualitativ eine radial nach außen wirkende Kraftkomponente auf das Erntegut erzeugt werden soll. Mit der Kammerzuführseite hingegen soll Erntegut aus dem Speicherraum heraus gefördert werden, so dass eine radial nach außen wirkende Kraftkomponente hier eher kontraproduktiv wäre. Die genaue Ausgestaltung der Übergabezinken und/oder deren Neigung hängt auch von der Ausgestaltung der Förderorgane (z.B. Speicherzinken) eines Speicherförderers ab (soweit vorhanden), da die jeweilige Kraftkomponente auf das Erntegut durch das gemeinsamer Einwirken von Übergabezinken und Förderorgane entsteht.

Der Wechsel vom Pressmodus in den Speichermodus erfordert eine Drehrichtungsumkehr des Übergaberotors. Diese lässt sich nur schwer oder auch gar nicht erreichen, wenn der Antrieb des Übergaberotors im Speichermodus lediglich ausgekoppelt wird, so dass sich der Übergaberotor frei drehen kann. Vielmehr ist es bevorzugt, dass die Rundballenpresse dazu eingerichtet ist, den Übergaberotor im Speichermodus wenigstens während einer Startphase anzutreiben. Die Startphase bezeichnet dabei einen Zeitintervall nach dem Wechsel vom Pressmodus zum Speichermodus. Je nach Ausgestaltung kann der Aufnahme-Erntegutstrom zu einem wesentlichen Teil durch den o.g. Speicherförderer angetrieben sein, weshalb die benötigte Antriebskraft und/oder das Antriebsdrehmoment für den Übergaberotor geringer sein kann als im Pressmodus. D. h. der entsprechende Antrieb dient gewissermaßen nur dazu, die Drehrichtungsumkehr zu unterstützen. Die Länge der Startphase kann unterschiedlich gewählt werden, bspw. könnte sie zwischen 5 und 50 % der Gesamtdauer des Speichermodus (bzw. des Binde- und Auswurfvorgangs) betragen.

Weiterhin ist es bevorzugt, dass die Rundballenpresse dazu eingerichtet ist, den Übergaberotor im Speichermodus wenigstens nach Ende der Startphase passiv durch den Erntegutstrom drehen zu lassen. D.h., einen Antrieb des Übergaberotors wird ausgekoppelt, so dass der Speicherrotor durch äußere Kräfte und/oder Drehmomente frei drehbar ist. Dabei ist vorgesehen, dass der zur Speichervorrichtung laufende Aufnahme-Erntegutstrom, welcher normalerweise durch den o.g. Speicherförderer angetrieben wird, ein entsprechendes Drehmoment auf den Übergaberotor ausübt und diesen mitführt. Wenngleich ein Antrieb während der Startphase bevorzugt ist, ist es grundsätzlich denkbar, den Übergaberotor im Speichermodus durchgehend passiv drehen zu lassen.

Eine weitere Ausführungsform sieht vor, dass die Rundballenpresse dazu eingerichtet ist, den Übergaberotor im Pressmodus mit einer höheren Drehzahl anzutreiben als im Speichermodus. Eine höhere Drehzahl bewirkt normalerweise ein schnelleres Leeren des Speicherraums. Je nach Ausgestaltung kann dies bedeuten, dass der Speicherraum schneller entleert wird, als er im Speichermodus befüllt wird, dies ist aber nicht zwangsläufig der Fall. In jedem Fall wird der Zeitraum verkürzt, während welchem zwei Erntegutströme, der Aufnahme-Erntegutstrom von der Aufnahmevorrichtung sowie der Speicher-Erntegutstrom von der Speichervorrichtung kommend, sich im Zuführkanal vereinigen.

Durch die Erfindung wird außerdem eine Übergabevorrichtung für eine Rundballenpresse zur Verfügung gestellt, die einen zu einer Presskammer führenden Zuführkanal aufweist sowie eine Speichervorrichtung mit einem Speicherraum zur zeitweisen Aufnahme von Erntegut, welcher über wenigstens eine Speicheröffnung mit dem Zuführkanal in Verbindung steht, welche Übergabevorrichtung einen Übergaberotor aufweist, der um eine Übergabeachse in einer Kammerzuführrichtung antreibbar ist, um in einem Pressmodus Erntegut durch den Zuführkanal in Richtung der Presskammer zu fördern.

Erfindungsgemäß ist der Übergaberotor dazu eingerichtet, in einem Speichermodus unter Drehung in einer der Kammerzuführrichtung entgegengesetzten Speicherzuführrichtung Erntegut aus dem Zuführkanal in Richtung des Speicherraums zu führen und im Pressmodus von der Speichervorrichtung abgegebenes Erntegut durch den Zuführkanal in Richtung der Presskammer zu fördern.

Die genannten Begriffe wurden bereits im Zusammenhang mit der erfindungsgemäßen Rundballenpresse erläutert und werden daher nicht nochmals erklärt. Vorteilhafte Ausgestaltungen der erfindungsgemäßen Übergabevorrichtung entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer Schnittdarstellung einer erfindungsgemäßen Rundballenpresse, mit einer erfindungsgemäßen Übergabevorrichtung, in einem Pressmodus;
- Fig. 2: eine Seitenansicht einer Schnittdarstellung der Rundballenpresse aus Fig.1 in einem Speichermodus;
- Fig. 3: eine weitere Seitenansicht einer Schnittdarstellung der Rundballenpresse aus Fig.1 im Pressmodus;
- Fig. 4: eine weitere Seitenansicht einer Schnittdarstellung der Rundballenpresse aus Fig.1 im Pressmodus;
- Fig. 5: eine Seitenansicht einer Speichervorrichtung der Rundballenpresse sowie der Übergabevorrichtung aus Fig. 1;
- Fig. 6: eine perspektivische Darstellung der Speichervorrichtung sowie der Übergabevorrichtung aus Fig. 5; und
- Fig. 7: eine rückwärtige Ansicht der Speichervorrichtung sowie der Übergabevorrichtung aus Fig. 5.

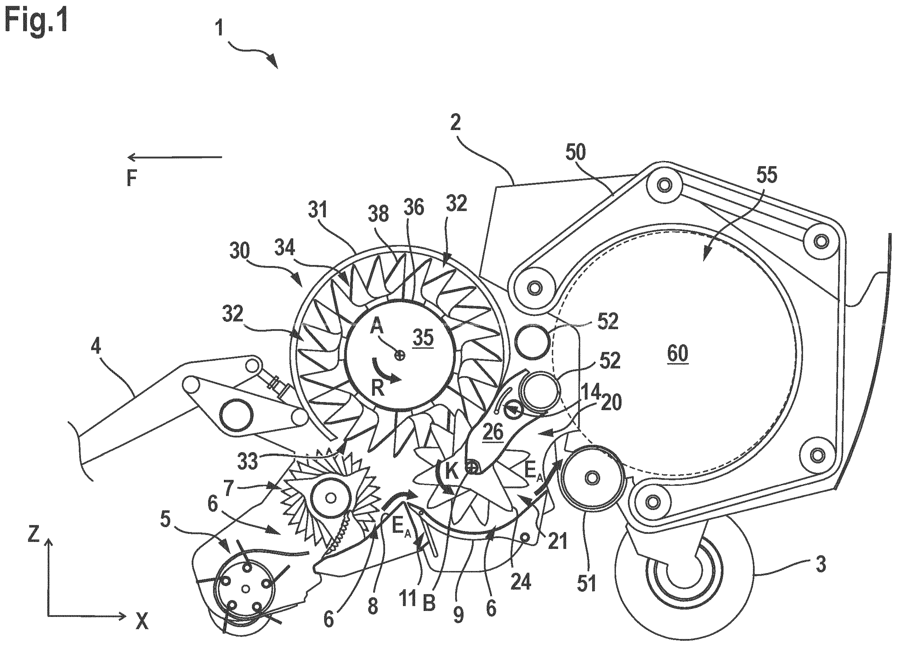

Fig. 1 zeigt eine Rundballenpresse 1 gemäß der vorliegenden Erfindung. Eine Längsachse X der Rundballenpresse 1 weist entgegen der Fahrtrichtung F nach hinten und eine Hochachse Z weist nach oben. An einem Rahmen 2 der Rundballenpresse 1 sind Laufräder 3 drehbar gelagert, auf welchen die Rundballenpresse 1 aufsteht. Die Rundballenpresse 1 ist in bekannter Weise dazu vorgesehen, von einer Zugmaschine, insbesondere einem Traktor (nicht dargestellt), gezogen zu werden, wozu sie eine Deichsel 4 aufweist. Die Erfindung ist aber nicht auf gezogene oder getragene Rundballenpressen 1 beschränkt, sondern umfasst auch selbstfahrende Rundballenpressen 1. In Fahrtrichtung F vorderseitig ist eine Pick-up 5 erkennbar, die im Betrieb (bezogen auf Fig. 1) im Uhrzeigersinn rotiert. Sie dient dazu, Erntegut, genauer gesagt Halmgut wie Stroh, Heu oder Gras, vom Boden aufzunehmen und als einen Aufnahme-Erntegutstrom E_{A} weiter in einen Zuführkanal 6 zu fördern, der zu einer Presskammer 55 führt. Von der Pick-up 5 gelangt das Erntegut durch den Zuführkanal 6 zu einem Schneidrotor 7, der entgegen dem Uhrzeigersinn rotiert. Er weist eine Mehrzahl von Zinken auf, die das Erntegut ergreifen, es im Zusammenwirken mit feststehenden Messern (ohne Bezugszeichen) schneiden und weiter entgegen der Fahrtrichtung F und leicht aufwärts durch den Zuführkanal 6 transportieren. Anstelle des Schneidrotors 7 könnte auch ein Förderrotor eingesetzt werden, der das Erntegut nur fördert und nicht zerkleinert.

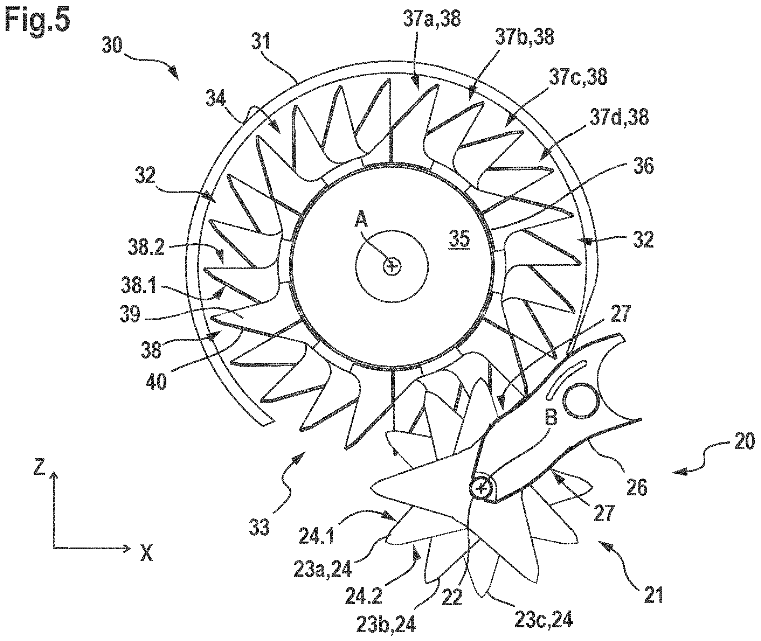

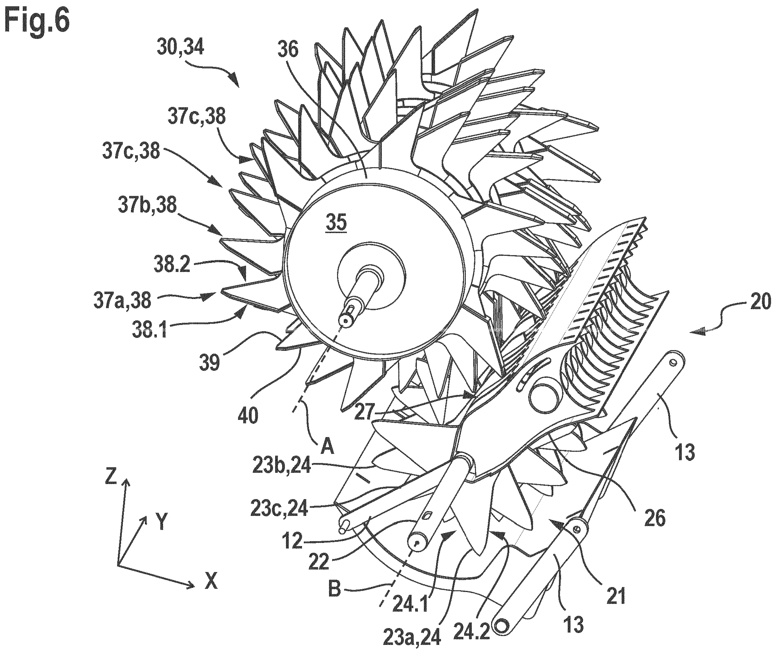

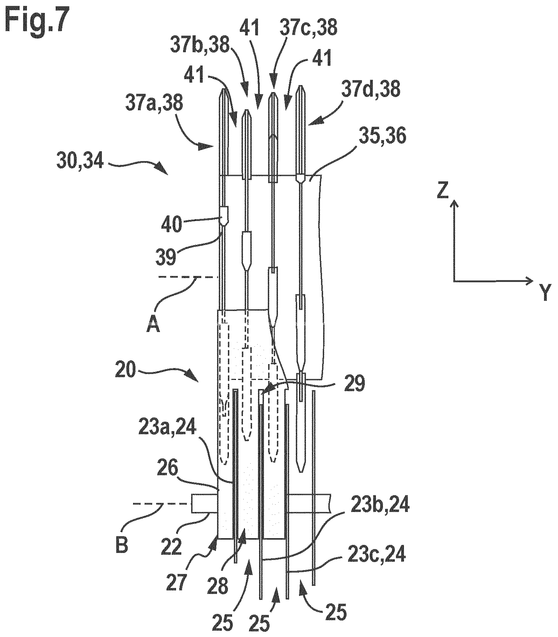

Auf dem Weg zur Presskammer 55 passiert der Aufnahme-Erntegutstrom E_{A} einen aufwärts geneigten Leit-Bodenabschnitt 8 unterhalb einer Speicheröffnung 33. Oberhalb der Speicheröffnung 33 schließt sich eine Speichervorrichtung 30 an, mit einer Speicherwandung 31, die einen Speicherraum 32 nach außen begrenzt. Die Speicherwandung 31 ist überwiegend rotationssymmetrisch zu einer Speicherachse A ausgebildet Der Speicherraum 32 steht über die Speicheröffnung 33 mit dem Zuführkanal 6 in Verbindung. Ein als Speicherrotor ausgebildeter Speicherförderer 34 ist um die Speicherachse A rotatorisch antreibbar. Er weist ein überwiegend zylindrisches Speicherförderer-Innenteil 35 mit einer den Speicherraum 32 nach innen begrenzenden Fördererwandung 36 auf. Vom Speicherförderer-Innenteil 35 ragen eine Mehrzahl von Speicherzinken 38 zur Speicherwandung 31 hin ab. Wie in Fig. 5 bis 7 erkennbar, sind die Speicherzinken 38 in Speicherzinkenkränzen 37a-37d gruppiert, welche bezüglich der Speicherachse A zum einen axial beabstandet sind sowie zum anderen tangential versetzt sind. Im vorliegenden Beispiel weist jeder Speicherzinkenkranz 37a-37d sechs Speicherzinken 38 auf und axial benachbarte Speicherzinkenkränze 37a-37d sind jeweils um 15° tangential versetzt. Zwischen benachbarten Speicherzinkenkränzen 37a-37d sind jeweils axiale Zwischenräume 41 ausgebildet. Der einzelne Speicherzinken 38 weist einen radial-tangential verlaufenden Basisabschnitt 39 auf sowie einen hiermit verbundenen, axial verlaufenden Aufsatz 40, welche beide aus Stahlblech gefertigt sein können. Wie in Fig. 1 bis 4 angedeutet, wird der Speicherförderer in einer Speicherförderrichtung R (in den Figuren im Gegenuhrzeigersinn) angetrieben. Eine bezüglich der Speicherförderrichtung R vorne liegende Förderseite 38.1 der Speicherzinken 38 weist eine Rückwärtsneigung auf, d.h. die Kante des jeweiligen Speicherzinkens 38 weicht, radial nach außen hin, tangential zurück. Im gezeigten Beispiel beträgt die Neigung gegenüber der radialen Richtung ca. 29°. Auf einer der Förderseite 38.1 gegenüberliegenden Rückseite 38.2 weisen die Speicherzinken 38 hingegen keine Neigung auf, d.h. sie verlaufen radial.

Im Weiteren passiert der Aufnahme-Erntegutstrom E_{A} einen bogenartig ausgebildeten Rotor-Bodenabschnitt 9, wobei er durch einen Übergaberotor 21 gefördert wird. Der Übergaberotor 21 ist Teil einer Übergabevorrichtung 20 und ist an einem gegenüber dem Rahmen 2 verstellbaren Rotorträger 26 drehbar gelagert, genauer gesagt ist er um eine parallel zur Querachse Y verlaufende Übergabeachse B antreibbar. Der Rotorträger 26 ist im Bereich des Übergaberotors 21 entlang einer Kreisbahn geführt verstellbar, die zur Achse des Schneidrotors 7 zentriert ist. In einem vom Übergaberotor 21 beabstandeten Bereich ist der Rotorträger 26 über eine erste Kulissenführung 11 bogenartig gegenüber dem Rahmen 2 geführt, und zwar derart, dass er immer dicht entlang der Kante der Speicherwandung 31 entlanggeführt wird, welche die Speicheröffnung 33 begrenzt. Er bildet somit eine Verlängerung der Speicherwandung 31. Die Verstellung des Rotorträgers 26 wird durch einen hier nicht dargestellten Aktor bewirkt. Der Übergaberotor 21 weist eine Welle 22 auf, an der eine Mehrzahl von Übergabezinkenkränzen 23a-23c befestigt sind. Jeder Übergabezinkenkranz 23a-23c weist eine Mehrzahl von Übergabezinken 24 auf, in diesem Beispiel jeweils drei, die bezüglich der Übergabeachse B tangential versetzt angeordnet sind. wie in der Zusammenschau von Fig. 5 bis 7 gut erkennbar ist, sind benachbarte Übergabezinkenkränze 23a-23c axial beabstandet und tangential zueinander versetzt, in diesem Fall um jeweils 30°. Fig. 1 sowie 3 bis 5 zeigt einen Zustand, in welchem der Rotorträger 26 so gegenüber dem Rahmen 2 positioniert ist, dass der Übergaberotor 21 mit den Übergabezinken 24 in die Zwischenräume 41 und somit durch die Speicheröffnung 33 in den Speicherraum 32 eingreift. Ein vorderer Bereich des Rotor-Bodenabschnitts 9 ist über eine zweite Kulissenführung 14 am Rahmen 2 geführt und dort über erste Koppelstreben 12 mit der Welle 22 verbunden, wobei sich die Welle gegenüber der Koppelstrebe 12 frei drehen kann. Auf diese Weise bewegt sich der vordere Bereich, durch die zweite Kulissenführung 14 geführt, synchron mit der Welle 22 aufwärts und abwärts, wodurch ein wenigstens annähernd gleichbleibender Abstand zwischen dem Rotor-Bodenabschnitt 9 und den Übergabezinken 24 gewährleistet ist. Somit können sich die Übergabezinken 24 in vergleichsweise geringem Abstand über den Rotor-Bodenabschnitt 9 hinweg bewegen und somit das Erntegut im Zuführkanal 6 optimal erfassen.

Der Rotorträger 26 bildet beiderseits jeweils einen Abstreifer 27 für den Übergaberotor 21. Hierzu weist er Schlitze und/oder Ausnehmungen 29 auf, durch welche die Übergabezinken 24 hindurchgeführt werden. Die Ausnehmungen 29 sind zwischen Abstreiferabschnitten 28 ausgebildet, die dazu dienen, das Erntegut wenigstens überwiegend zurückzuhalten, wenn sich ein Übergabezinken 24 durch eine Ausnehmung 29 hindurchbewegt. Die Übergabezinken 24 weisen auf einer in Speicherzuführrichtung S vorne liegenden Speicherzuführseite 24.1 eine stärkere Rückwärtsneigung auf als auf einer in Kammerzuführrichtung K vorne liegenden Kammerzuführseite 24.2. Im vorliegenden Beispiel beträgt die Neigung auf der Speicherzuführseite 24.1 in etwa 20° gegenüber der radialen Richtung, während sie auf der gegenüberliegenden Kammerzuführseite 24.2 nur etwa 17° beträgt. Auf beiden Seiten 24.1, 24.2 muss die Kante nach außen hin tangential zurückweichen, da andernfalls ein Abstreifen von Erntegut am jeweiligen Abstreifer 27 nicht möglich wäre. Im hier gezeigten Beispiel beträgt der Winkel zwischen dem Abstreifer 27 und der Kante des Übergabezinkens 24 (bezogen auf eine Position, in welcher der Übergabezinken schon fast vollständig in eine Ausnehmung 29 eingetaucht ist) ca. 50°, sowohl bezogen auf die Speicherzuführseite 24.1 also auch auf die Kammerzuführseite 24.2. Vorteilhaft könnte der Abstreifer 27 derart modifiziert werden, dass sich ein noch größerer Winkel ergibt, z.B. über 60° oder über 70°.

Die stärkere Neigung auf der Speicherzuführseite 24.1 ist insofern sinnvoll, als hiermit Erntegut in den Speicherraum 32 hinein gefördert wird, weshalb bezüglich der Übergabeachse B eine radial nach außen wirkende Kraftkomponente auf das Erntegut hilfreich ist. Mit der Kammerzuführseite 24.2 hingegen soll Erntegut aus dem Speicherraum 32 heraus gefördert werden, so dass eine radial nach außen wirkende Kraftkomponente hier eher kontraproduktiv ist. Insbesondere ist allerdings auch das Zusammenwirkten der Übergabezinken 24 mit den Speicherzinken 38 zu berücksichtigen, welches im einen Fall für ein Einfördern, im anderen Fall für ein Ausfördern sorgen soll.

Das Einfördern wird allerdings auch dadurch unterstützt, dass die Geschwindigkeiten des Speicherförderers 34 und des Übergaberotors 21 im Speichermodus so abgestimmt sind, dass die Fördergeschwindigkeit des Speicherförderers 34, mit welcher dieser Erntegut fördern kann (d.h. die Tangentialgeschwindigkeit der Speicherzinken 38), größer ist als die Fördergeschwindigkeit des Übergaberotors 21 (d.h. die Tangentialgeschwindigkeit der Übergabezinken 24). Somit ziehen die Speicherzinken 38 das Erntegut aktiv von den Übergabezinken ab. Demgegenüber kann die Fördergeschwindigkeit des Übergaberotors 21 im Pressmodus wenigstens der Fördergeschwindigkeit des Speicherförderers 34 entsprechen.

In der Presskammer 55 erfolgen die eigentliche Ballenbildung und das Verpressen des Ernteguts zu einem Erntegutballen 60. Hierzu sind eine Starterwalze 51, zwei Presswalzen 52 sowie eine Mehrzahl von (senkrecht zur Zeichenebene nebeneinander angeordneten) endlosen Presselementen 50 (in diesem Fall Pressriemen) vorgesehen, die die Presskammer 55 definieren und eine variable Größe derselben ermöglichen. Statt der Pressriemen könnte aber auch z.B. ein Kettenstabförderer eingesetzt werden oder es könnte auch eine Presskammer 55 mit fester Größe vorgesehen sein. Die Starterwalze 51 ist gegenüber dem Rahmen 2 verstellbar, um bei Bedarf den Querschnitt des Zugangs zur Presskammer 55 vergrößern zu können. Ein hinterer Bereich des Rotor-Bodenabschnitts 9 ist über zweite Koppelstreben 13 mit der Achse der Starterwalze 51 verbunden, so dass er deren Bewegung folgt, wenn sie verstellt wird.

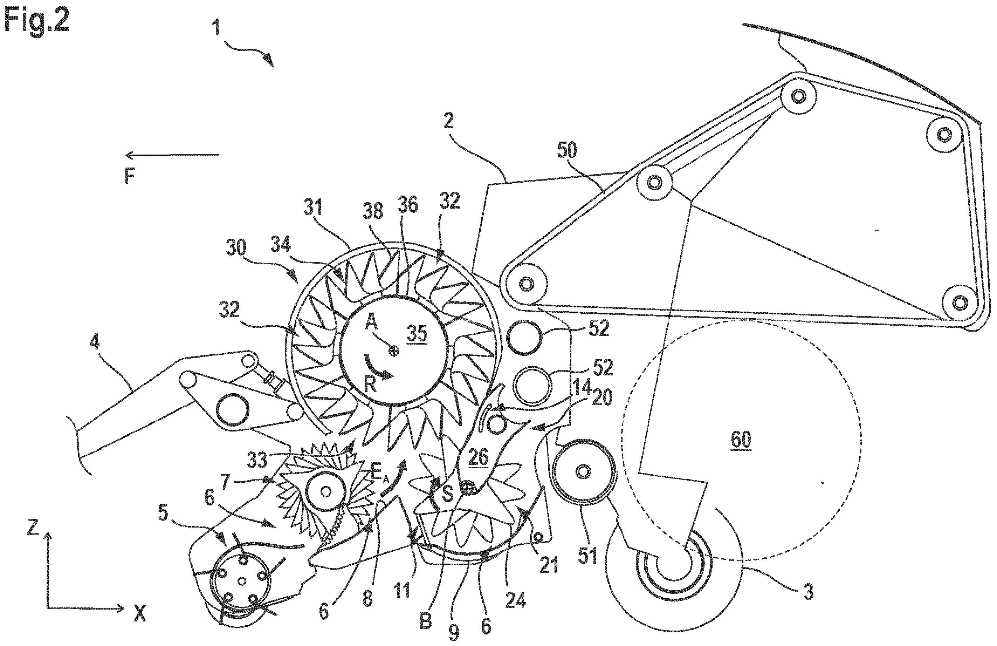

Fig.1 zeigt die Rundballenpresse 1 in einem Pressmodus, in welchem der Übergaberotor 21 das Erntegut durch den Zuführkanal 6 zur Presskammer 55 hin fördert. Im Pressmodus dreht sich der Übergaberotor 21 in einer Kammerzuführrichtung K, bezüglich Fig.1 im Gegenuhrzeigersinn. Die Speichervorrichtung 30 ist dabei vollständig entleert. Ein von der Pick-up 5 kommender Aufnahme-Erntegutstrom E_{A} wird der Presskammer 55 zugeführt. Dargestellt ist ein Zustand, in welchem der Erntegutballen 60 seine vorbestimmte Größe erreicht hat, also eine Endphase des Pressmodus. Nachfolgend muss der Erntegutballen 60 über eine hier nicht dargestellte Bindevorrichtung mit Bindematerial versehen und anschließend aus der Presskammer 55 ausgeworfen werden. Während dieses Zeitraums kann kein Erntegut in der Presskammer 55 verarbeitet werden. Daher wechselt die Rundballenpresse 1 in einen Speichermodus, der in Fig. 2 dargestellt ist. Wesentlich hierbei ist, dass der Übergaberotor 21 die Drehrichtung wechselt und nunmehr in einer Speicherzuführrichtung S angetrieben wird, mit Bezug auf Fig. 2 also im Uhrzeigersinn. Der von der Pick-up 5 und dem Schneidrotor 7 kommende Aufnahme-Erntegutstrom E_{A} wird hierdurch nicht mehr in Richtung der Presskammer 55 weitergeleitet, sondern aufwärts durch die Speicheröffnung 33 in den Speicherraum 32. Die genannte Bewegung wird durch die Aufwärtsneigung des Leit-Bodenabschnitts 8 unterstützt. Zu Anfang des Speichermodus ist die Übergabevorrichtung 20 in einer Position, die Fig. 1 entspricht. Hierdurch können die Übergabezinken 24 weit in den Speicherraum 32 eingreifen und so das Erntegut bis in einen Bereich nahe der Fördererwandung 36 transportieren. Im weiteren Verlauf kann der Übergaberotor 21 sukzessive aus dem Speicherraum 32 herausgefahren werden, während der Speicherraum 32 von innen nach außen gefüllt wird. Normalerweise ist vorgesehen, den Übergaberotor 21 während des gesamten Speichermodus anzutreiben; u.U. könnte er aber auch nur während einer Startphase angetrieben werden, um die Bewegungsumkehr zu initiieren, und danach passiv durch den Aufnahme-Erntegutstrom E_{A} weitergedreht werden. Von maßgeblicher Bedeutung ist in diesem Fall der indirekte Eingriff mit dem angetriebenen Speicherrotor 34 über das mitgeführte Erntegut.

Die Neigung der Speicherzinken 37 auf der Rückseite 38.2 ist dabei so auf die Neigung der Übergabezinken 24 auf der Speicherzuführseite 24.1 abgestimmt, dass die Übergabezinken 24 das Erntegut entlang der Speicherzinken 38 in den Speicherraum hineinschieben können. Die Verstellung der Übergabevorrichtung 20 wird fortgesetzt, bis die Übergabezinken 24 nicht mehr oder nur noch unwesentlich in die Zwischenräume 41 eingreifen, wie in Fig. 2 dargestellt. Der Speicherraum 32 ist so dimensioniert, dass normalerweise Erntegut aufgenommen werden kann, bis der Erntegutballen 60 gebunden wurde und ausgeworfen werden kann, wie in Fig. 2 dargestellt.

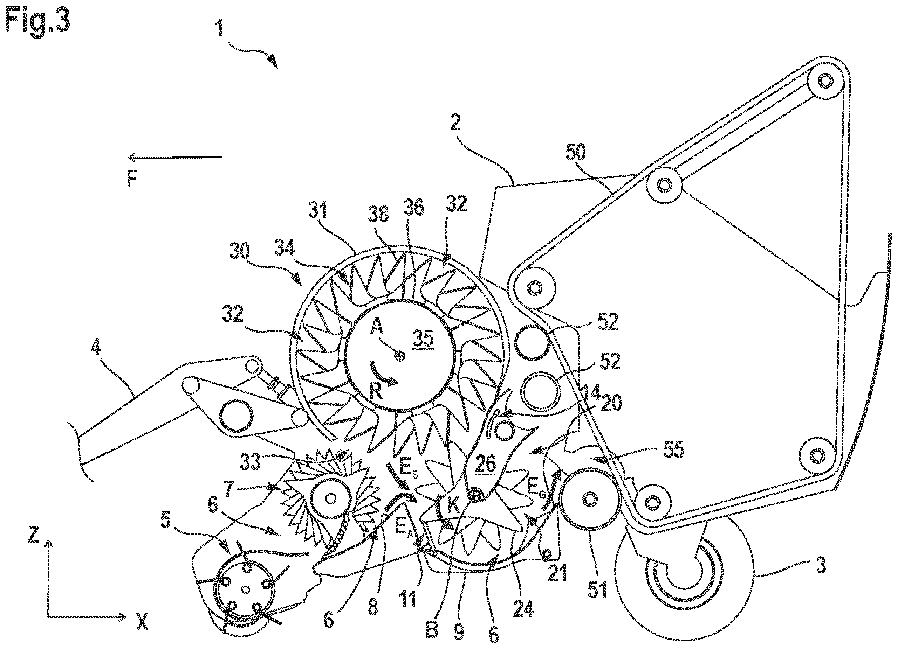

Da die Presskammer 55 nun zur Bildung eines neuen Erntegutballen 60 bereitsteht, wechselt die Rundballenpresse wiederum in den Pressmodus, wozu der Übergaberotor 21 wiederum in Kammerzuführrichtung K angetrieben wird. Fig.3 stellt den Zustand der Rundballenpresse 1 zu Beginn des Pressmodus dar. Dabei greifen die Übergabezinken 21 nur wenig oder gar nicht in den Speicherraum 32 ein. Auf diese Weise wird verhindert, dass der Speicherrotor 21 eine zu große Menge von Erntegut entgegen der Förderbewegung des kontinuierlich weiterlaufenden Speicherrotors 34 herausfördern muss. Erfasst wird zunächst nur eine dünne, bezüglich der Speicherachse A radial äußerste Schicht. Das Erntegut aus dieser Schicht wird durch die Speicheröffnung 33 abwärts in den Zuführkanal 6 und weiter entlang des Rotor-Bodenabschnitts 9 zur Presskammer 55 in gefördert. Dieser aus dem Speicherraum 32 kommende Speicher-Erntegutstrom vereinigt sich mit dem Aufnahme-Erntegutstrom E_{A}, der von der Pick-up 5 und dem Schneidrotor 7 kommt zu einem Gesamt-Erntegutstrom E_{G}. Um den Speicherraum 32 schnell zu leeren und außerdem die kombinierten Erntegutströme effizient zur Presskammer 55 führen zu können, arbeitet der Übergaberotor 21 mit einer höheren Drehzahl als im Speichermodus, z.B. zwischen 80 und 120 U/min. Beim Ausfördern wirken die Vorderseiten 38.1 der Speicherzinken 38 sowie den Speicherzuführseiten 24.1 gegenüberliegende Kammerzuführseiten 24.2 der Übergabezinken 24 gegeneinander auf das zwischengeordnete Erntegut ein. Die Rückwärtsneigung auf der Vorderseite 38.1 ist größer als die auf der Kammerzuführseite 24.2, d.h. diese sind so abgestimmt, dass das Erntegut herausgefördert werden kann, statt in den Speicherraum 32 zurückgedrückt zu werden.

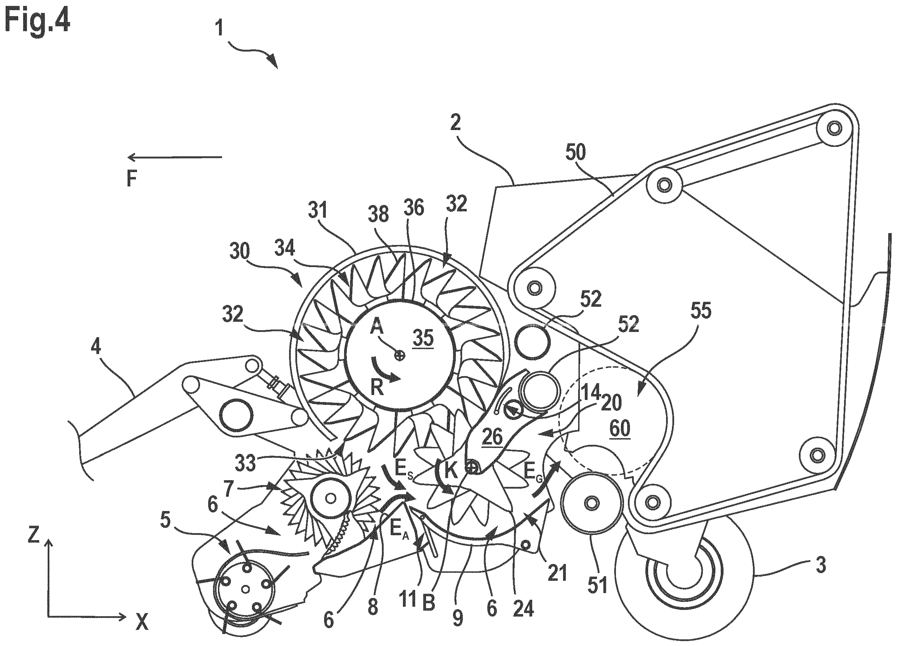

Im Laufe des Pressmodus wird die Übergabevorrichtung 20 wiederum sukzessive verstellt, so dass der Übergaberotor 21 nach und nach weiter in den Speicherraum 32 eingreift und das gespeicherte Erntegut sukzessive von außen nach innen erfasst wird. Fig.4 zeigt dabei einen Zustand, in welchem die Speicherzinken 24 bereits weit in den Speicherraum 32 eingreifen, während in der Presskammer 55 bereits ein Erntegutballen 60 zunehmender Größe geformt wird. Wie oben beschrieben, folgt der Rotor-Bodenabschnitt 9 sämtlichen Verstellvorgängen des Speicherrotors 21, so dass sich ein vorgesehener, annähernd gleichbleibender Abstand zum Speicherrotor 21 ergibt. Im hinteren Bereich des Rotor-Bodenabschnitts 9 kann auch z.B. zu Beginn des Pressmodus ein größerer Abstand eingestellt werden, um den insgesamt größeren Gesamt-Erntegutstrom E_{G} effizienter fördern zu können. Hierzu wird die Starterwalze 51 abgesenkt, was eine synchrone Absenkung des hinteren Bereichs des Rotor-Bodenabschnitts 9 bedingt.

Der Übergaberotor 21 wird im Speichermodus mit einer geringeren Drehzahl in Speicherzuführrichtung S angetrieben, während er im Pressmodus mit einer höheren Drehzahl in Kammerzuführrichtung K angetrieben wird. Die notwendige Richtungsumkehr wird durchgeführt, während die Speicherzinken 24 nicht in den Speicherraum 32 eingreifen. Demgegenüber wird Speicherrotor 34 durchgehend mit konstanter Geschwindigkeit in Speicherförderrichtung R angetrieben, was seine Steuerung sowie die gesamte Steuerung der Rundballenpresse 1 wesentlich vereinfacht.

## Patentansprüche

1. Rundballenpresse (1), aufweisend einen zu einer Presskammer (55) führenden Zuführkanal (6), eine Übergabevorrichtung (20) mit einem Übergaberotor (21), der um eine Übergabeachse (B) in einer Kammerzuführrichtung (K) antreibbar ist und eine Mehrzahl von Übergabezinken (24) aufweist, die sich bezüglich der Übergabeachse (B) radial nach außen erstrecken, um in einem Pressmodus Erntegut durch den Zuführkanal (6) in Richtung der Presskammer (55) zu fördern, sowie eine Speichervorrichtung (30) mit einem Speicherraum (32) zur zeitweisen Aufnahme von Erntegut, welcher über wenigstens eine Speicheröffnung (33) mit dem Zuführkanal (6) in Verbindung steht,
**dadurch gekennzeichnet, dass**
der Übergaberotor (21) dazu eingerichtet ist, in einem Speichermodus unter Drehung in einer der Kammerzuführrichtung (K) entgegengesetzten Speicherzuführrichtung (S) Erntegut aus dem Zuführkanal (6) zur Zwischenspeicherung in Richtung des Speicherraums (32) zu führen und im Pressmodus in den Speicherraum einzugreifen und von der Speichervorrichtung (30) abgegebenes Erntegut durch den Zuführkanal (6) in Richtung der Presskammer (55) zu fördern.

2. Rundballenpresse (1) nach einem der vorherigen Ansprüche, **dadurch gekennzeichnet, dass** der Übergaberotor (21) dazu eingerichtet ist, im Pressmodus in den Speicherraum (32) einzugreifen, um Erntegut aus diesem herauszufördern.

3. Rundballenpresse (1) nach einem der vorherigen Ansprüche, **dadurch gekennzeichnet, dass** die Übergabevorrichtung (20) einen Rotorträger (26) aufweist, der gegenüber einem Rahmen (2) der Rundballenpresse (1) verstellbar ist und an dem der Übergaberotor (21) drehbar gelagert ist.

4. Rundballenpresse (1) nach einem der vorherigen Ansprüche, **dadurch gekennzeichnet, dass** der Übergaberotor (21) in Abhängigkeit von der Stellung des Rotorträgers (26) durch eine Speicheröffnung (33) in den Speicherraum (32) eingreift.

5. Rundballenpresse (1) nach einem der vorherigen Ansprüche, **dadurch gekennzeichnet, dass** diese dazu eingerichtet ist, den Rotorträger (26) im Pressmodus derart zu verstellen, dass der Übergaberotor (21) im zeitlichen Verlauf zunehmend in den Speicherraum (32) eingreift.

6. Rundballenpresse (1) nach einem der vorherigen Ansprüche, **dadurch gekennzeichnet, dass** diese dazu eingerichtet ist, den Rotorträger (26) im Speichermodus derart zu verstellen, dass der Übergaberotor (21) im zeitlichen Verlauf weniger in den Speicherraum (32) eingreift.

7. Rundballenpresse (1) nach einem der vorherigen Ansprüche, **dadurch gekennzeichnet, dass** diese eingerichtet ist, eine Drehrichtungsumkehr des Übergaberotors (21) vorzunehmen, wenn dieser wenigstens überwiegend aus dem Speicherraum (32) herausgeführt ist.

8. Rundballenpresse (1) nach einem der vorherigen Ansprüche, **dadurch gekennzeichnet, dass** am Rotorträger (26) wenigstens ein Abstreifer (27) für den Übergaberotor (21) angeordnet ist.

9. Rundballenpresse (1) nach einem der vorherigen Ansprüche, **dadurch gekennzeichnet, dass** die Übergabezinken (24) sowohl auf einer in Kammerzuführrichtung (K) vorne angeordneten Kammerzuführseite (24.1) als auch auf einer in Speicherzuführrichtung (S) vorne angeordneten Speicherzuführseite (24.2) eine Rückwärtsneigung aufweisen, so dass die jeweilige Kante des Übergabezinkens (24) radial nach außen hin tangential zurückweicht.

10. Rundballenpresse (1) nach einem der vorherigen Ansprüche, **dadurch gekennzeichnet, dass** die Übergabezinken (24) auf der Speicherzuführseite (24.1) eine stärkere Rückwärtsneigung aufweisen als auf der Kammerzuführseite (24.2).

11. Rundballenpresse (1) nach einem der vorherigen Ansprüche, **dadurch gekennzeichnet, dass** diese dazu eingerichtet ist, den Übergaberotor (21) im Speichermodus wenigstens während einer Startphase anzutreiben.

12. Rundballenpresse (1) nach einem der vorherigen Ansprüche, **dadurch gekennzeichnet, dass** diese dazu eingerichtet ist, den Übergaberotor (21) im Speichermodus wenigstens nach Ende der Startphase passiv durch den Erntegutstrom drehen zu lassen.

13. Rundballenpresse (1) nach einem der vorherigen Ansprüche, **dadurch gekennzeichnet, dass** diese dazu eingerichtet ist, den Übergaberotor (21) im Pressmodus mit einer höheren Drehzahl anzutreiben als im Speichermodus.

## Claims

1. Round baler (1) comprising a feed channel (6) leading to a baling chamber (55), a transfer device (20) having a transfer rotor (21) which can be driven about a transfer axis (B) in a chamber feed direction (K) and which has a plurality of transfer tines (24) which extend radially outward with respect to the transfer axis (B) in order, in a baling mode, to convey harvested material through the feed channel (6) toward the baling chamber (55), and a storage device (30) having a storage room (32) for temporarily receiving the harvested material, which storage space is connected to the feed channel (6) via at least one storage opening (33),
**characterized in that**
the transfer rotor (21) is designed, in a storage mode, to feed the harvested material from the feed channel (6) toward the storage space (32), for intermediate storage, while rotating in a storage feed direction (S) which is counter to the chamber feed direction (K) and, in the baling mode, to engage in the storage space and to convey the harvested material discharged from the storage device (30) through the feed channel (6) toward the baling chamber (55).

2. Round baler (1) according to any of the preceding claims,
**characterized in that** the transfer rotor (21) is designed, in the baling mode, to engage in the storage space (32) in order to convey the harvested material out of the storage space.

3. Round baler (1) according to any of the preceding claims,
**characterized in that** the transfer device (20) comprises a rotor carrier (26) which is adjustable relative to a frame (2) of the round baler (1) and on which the transfer rotor (21) is rotatably mounted.

4. Round baler (1) according to any of the preceding claims,
**characterized in that** the transfer rotor (21) engages in the storage space (32) through a storage opening (33) depending on the position of the rotor carrier (26).

5. Round baler (1) according to any of the preceding claims,
**characterized in that** the round baler is designed, in the baling mode, to adjust the rotor carrier (26) such that the transfer rotor (21) increasingly engages in the storage space (32) over time.

6. Round baler (1) according to any of the preceding claims,
**characterized in that** the round baler is designed, in the storage mode, to adjust the rotor carrier (26) such that the transfer rotor (21) decreasingly engages in the storage space (32) over time.

7. Round baler (1) according to any of the preceding claims,
**characterized in that** the round baler is designed to reverse the direction of rotation of the transfer rotor (21) when the transfer rotor has been at least predominantly guided out of the storage space (32).

8. Round baler (1) according to any of the preceding claims,
**characterized in that** at least one scraper (27) for the transfer rotor (21) is arranged on the rotor carrier (26).

9. Round baler (1) according to any of the preceding claims,
**characterized in that** the transfer tines (24) are inclined backward both on a chamber feed side (24.1) arranged at the front in the chamber feed direction (K) and on a storage feed side (24.2) arranged at the front in a storage feed direction (S), so that the relevant edge of the transfer tine (24) moves back radially outward in a tangential manner.

10. Round baler (1) according to any of the preceding claims,
**characterized in that** the transfer tines (24) are inclined further backward on the storage feed side (24.1) than on the chamber feed side (24.2).

11. Round baler (1) according to any of the preceding claims,
**characterized in that** the round baler is designed to drive the transfer rotor (21) in the storage mode at least during a start-up phase.

12. Round baler (1) according to any of the preceding claims,
**characterized in that** the round baler is designed to allow the transfer rotor (21) to rotate passively through the harvested material flow in the storage mode at least after the end of the start-up phase.

13. Round baler (1) according to any of the preceding claims,
**characterized in that** the round baler is designed to drive the transfer rotor (21) at a higher speed in the baling mode than in the storage mode.

## Revendications

1. Presse à balles rondes (1), présentant un canal d'acheminement (6) menant à une chambre de pressage (55), un dispositif de transfert (20) comportant un rotor de transfert (21) qui peut être entraîné autour d'un axe de transfert (B) dans un sens d'acheminement de chambre (K) et présente une pluralité de dents de transfert (24) s'étendant radialement vers l'extérieur par rapport à l'axe de transfert (B) afin de transporter, dans un mode de pressage, la récolte à travers le canal d'acheminement (6) en direction de la chambre de pressage (55), ainsi qu'un dispositif de stockage (30) comportant un espace de stockage (32) pour la réception temporaire de la récolte, lequel espace de stockage est en liaison avec le canal d'acheminement (6) par l'intermédiaire d'au moins une ouverture de stockage (33),
**caractérisée en ce que**
le rotor de transfert (21) est conçu pour, dans un mode de stockage, guider la récolte depuis le canal d'acheminement (6) en direction de l'espace de stockage (32) pour un stockage intermédiaire en tournant dans un sens d'acheminement de stockage (S) opposé au sens d'acheminement de chambre (K) et pour, dans le mode de pressage, pénétrer dans l'espace de stockage et transporter la récolte déchargée par le dispositif de stockage (30) à travers le canal d'acheminement (6) en direction de la chambre de pressage (55).

2. Presse à balles rondes (1) selon l'une des revendications précédentes, **caractérisée en ce que** le rotor de transfert (21) est conçu pour, dans le mode de pressage, pénétrer dans l'espace de stockage (32) afin d'en extraire la récolte.

3. Presse à balles rondes (1) selon l'une des revendications précédentes, **caractérisée en ce que** le dispositif de transfert (20) présente un support pour rotor (26) qui est réglable par rapport à un châssis (2) de la presse à balles rondes (1) et sur lequel le rotor de transfert (21) est monté de manière à pouvoir tourner.

4. Presse à balles rondes (1) selon l'une des revendications précédentes, **caractérisée en ce que** le rotor de transfert (21) pénètre dans l'espace de stockage (32) par une ouverture de stockage (33) en fonction de la position du support pour rotor (26).

5. Presse à balles rondes (1) selon l'une des revendications précédentes, **caractérisée en ce qu'**elle est conçue pour régler le support pour rotor (26) dans le mode de pressage de telle sorte que le rotor de transfert (21) pénètre progressivement dans l'espace de stockage (32) au fil du temps.

6. Presse à balles rondes (1) selon l'une des revendications précédentes, **caractérisée en ce qu'**elle est conçue pour régler le support pour rotor (26) dans le mode de stockage de telle sorte que le rotor de transfert (21) pénètre moins dans l'espace de stockage (32) au fil du temps.

7. Presse à balles rondes (1) selon l'une des revendications précédentes, **caractérisée en ce qu'**elle est conçue pour provoquer une inversion du sens de rotation du rotor de transfert (21) lorsque celui-ci est sorti, au moins en grande partie, de l'espace de stockage (32).

8. Presse à balles rondes (1) selon l'une des revendications précédentes, **caractérisée en ce qu'**au moins un racleur (27) destiné au rotor de transfert (21) est disposé sur le support pour rotor (26).

9. Presse à balles rondes (1) selon l'une des revendications précédentes, **caractérisée en ce que** les dents de transfert (24) présentent une inclinaison vers l'arrière tant sur un côté d'acheminement de chambre (24.1) disposé à l'avant dans le sens d'acheminement de chambre (K) que sur un côté d'acheminement de stockage (24.2) disposé à l'avant dans le sens d'acheminement de stockage (S), de sorte que le bord respectif de la dent de transfert (24) s'écarte radialement vers l'extérieur dans la direction tangentielle.

10. Presse à balles rondes (1) selon l'une des revendications précédentes, **caractérisée en ce que** les dents de transfert (24) présentent une inclinaison vers l'arrière plus prononcée sur le côté d'acheminement de stockage (24.1) que sur le côté d'acheminement de chambre (24.2).

11. Presse à balles rondes (1) selon l'une des revendications précédentes, **caractérisée en ce qu'**elle est conçue pour entraîner le rotor de transfert (21) dans le mode de stockage, au moins pendant une phase de démarrage.

12. Presse à balles rondes (1) selon l'une des revendications précédentes, **caractérisée en ce qu'**elle est conçue pour laisser le rotor de transfert (21) tourner passivement sous l'effet du flux de la récolte dans le mode de stockage, au moins après la fin de la phase de démarrage.

13. Presse à balles rondes (1) selon l'une des revendications précédentes, **caractérisée en ce qu'**elle est conçue pour entraîner le rotor de transfert (21) à une vitesse de rotation plus élevée dans le mode de pressage que dans le mode de stockage.
